# EUROPEAN PATENT SPECIFICATION

(11) **EP 4 019 410 B1**
(45) Date of publication and mention of the grant of the patent: **11.09.2024**
(21) Application number: 20217106.2
(22) Date of filing: 23.12.2020
(51) Int. Cl.: B64D 45/00, G01M 1/12, B64D 9/00

(54) **A SYSTEM AND METHOD FOR MEASURING WEIGHT AND BALANCE ON AN AIRCRAFT**
SYSTEM UND VERFAHREN ZUR MESSUNG DES GEWICHTS UND DES GLEICHGEWICHTS IN EINEM FLUGZEUG
SYSTÈME ET PROCÉDÉ DE MESURE DU POIDS ET DE L'ÉQUILIBRE SUR UN AÉRONEF

(43) Date of publication of application: 29.06.2022
(73) Proprietor: Rockwell Collins, Inc., Cedar Rapids, IA 52498 (US)
(72) Inventor: FRANZINI, Giovanni, Glanmire, Co. Cork, T45 FD66 (IE); SALINAS HERNANDO, Gonzalo, Cork, T12 R258 (IE)
(74) Representative: Dehns

(56) References cited:
- WO-A1-2020/160471
- US-A1- 2004 226 996
- US-A1- 2020 023 811

## Description

### TECHNICAL FIELD

The present application relates to a system and method for measuring weight and balance on an aircraft.

### BACKGROUND

Centre of gravity calculation is a safety critical task that is performed prior to departure of an aircraft. According to the value of the centre of gravity, pilots trim horizontal stabilizers in order to compensate the pitch moment generated by a forward or aft centre of gravity position. A centre of gravity outside the aircraft safety envelope can lead to dramatic consequences, which include tail strike, pitch-up during climb, stall and crash.

In a passenger aircraft, determining the total weight and distribution of the occupants, and of the hand baggage, is required in order to compute the centre of gravity of the aircraft. Conventional methods include flight attendants counting passengers manually and a rough weight estimate for adults and children is calculated. The estimate may change according to the season in order to, for example, consider the weight of the clothes worn by the passengers. Once the passenger distribution is known, the weight distribution in predetermined cabin zones is calculated and then entered manually into the Flight Management System. The Flight Management System then computes the centre of gravity of the aircraft. This can lead to inaccurate and time consuming processes. Moreover, the weight of the hand baggage is usually not considered. Normally the weight of the hand baggage is included in the overall passenger weight estimate or is simply neglected prior to flight. WO 2020/160471 A1 discloses an aircraft weight and balance measurement system and method, which comprises an identification means which enables each person and/or object boarding an aircraft to be tracked, and their weight to be known or estimated. A processing system receives data from the identification means and produces an operational weight and balance calculation for the aircraft.

### SUMMARY OF THE INVENTION

In one aspect, there is provided a system for calculating weight and distribution on an aircraft, as provided in claim 1. The system comprises an aircraft, at least one cabin camera configured to view the cabin of the aircraft, an image collector configured to collect images from the at least one cabin camera and a processor. The processor is configured to continuously perform the following steps: a) detecting passengers and/or hand baggage from the images collected from the image collector, b) estimating positions of the passengers and/or hand baggage from the images collected from the image collector, and c) estimating weight of the passengers and/or hand baggage from the images collected from the image collector. The processor also calculates a real-time weight distribution of the aircraft based on the estimates provided in steps a) - c). The real-time weight distribution of the aircraft is determined pre-flight, during flight and on landing and the real-time weight distribution of the aircraft is continuously updated to a pilot and/or a Flight Management System.

The system may further include a first module configured to determine passenger weight distribution based on the images collected from the image collector, and a second module configured to determine hand baggage weight distribution based on the images collected from the image collector. The system may further comprise a third module configured to calculate cabin weight distribution based on the data from the first and second modules.

The first module may be configured to determine biometric information of the detected passengers and wherein the passenger weight distribution may be based on the biometric information, and the position, of the passenger.

The second module may be configured to determine the size and shape of detected hand baggage, and wherein the hand baggage weight distribution may be based on the size and shape of the detected hand baggage, and the position, of the hand baggage.

The image collector may be hardware or software.

In another aspect, there is provided a method of continuously calculating weight distribution on an aircraft, as provided in claim 7. The method comprises collecting images from at least one cabin camera that is configured to view the cabin of the aircraft, detecting passengers and/or hand baggage from the images collected, estimating positions of the passengers and/or hand baggage from the collected images, estimating weight of the passengers and/or hand baggage from the images collected, and calculating a real-time weight distribution of the aircraft based on the estimated weight and estimated positions of the passengers and/or hand baggage. The real-time weight distribution of the aircraft is determined pre-flight, during flight and on landing and the real-time weight distribution of the aircraft is continuously updated to a pilot and/or a Flight Management System.

There may be provided a first module for detecting passengers, estimating positions of the passengers and estimating weight of the passengers. There may also be provided a second module for detecting hand baggage, estimating positions of the hand baggage and estimating the weight of the hand baggage. There may also be provided a third module for calculating the weight distribution of the aircraft based on the data from the first and second modules.

The first module may be configured to determine biometric information of the passengers.

The second module may be configured to determine the size and shape of detected hand baggage.

### BRIEF DESCRIPTION OF THE DRAWINGS

Figure 1 shows an example of a system for calculating weight and distribution of an aircraft.
Figure 2 shows an example of the method of using the system of Figure 1.
Figure 3 shows an example of passenger weight estimation with various parameters.

### DETAILED DESCRIPTION

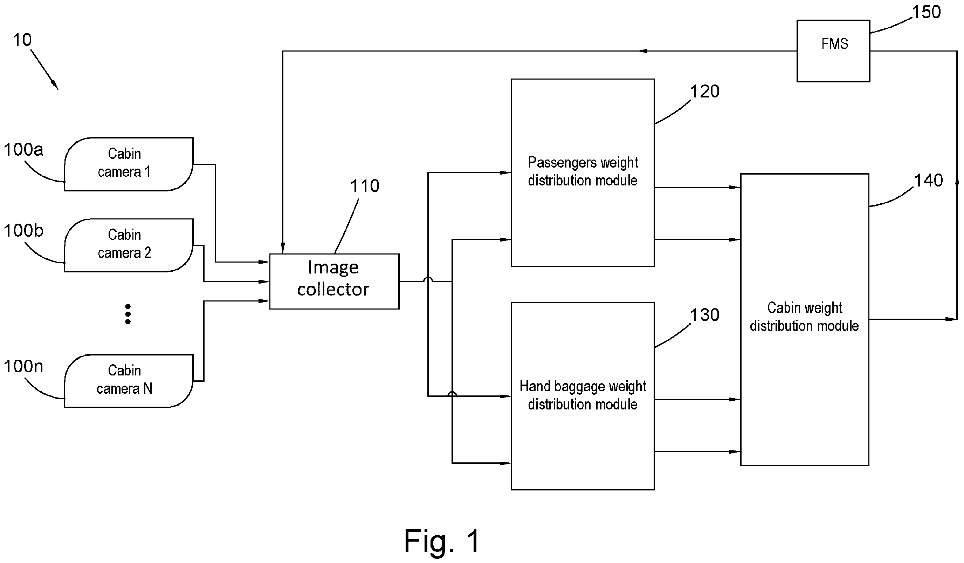

An example of a system 10 for calculating weight and distribution of an aircraft is shown in Figure 1. The system 10 includes one or more imaging apparatus, such as a first cabin camera 100a, a second cabin camera 100b and an n^{th} cabin camera 100n, n being any number greater than two. The amount of cabin cameras, 100a-100n, is determined by the size of the aircraft and any number that is necessary to have a field of view of the entire cabin is envisaged in the system 10. The cabin cameras 100a-100n ensure that the entire cabin is monitored for passengers and cabin baggage in order to effectively calculate the centre of gravity of the aircraft by calculating the weight and distribution of the passengers and cabin baggage. The cabin cameras 100a-100n monitor the entirety of the cabin whilst grounded before take-off, during flight and on landing of the aircraft.

As shown in Figure 1, system 10 includes an imaging collector 110 that collects the images from the cabin cameras 100a-100n. The imaging collector 110 may be hardware and/or software within the system 10. For example, the image collector 110 may be hardware, as an independent device, or software, running either in an independent processor or a processor within the system, as mentioned below. When the cabin cameras 100a-100n are in operation (e.g. before take-off, in flight and/or on landing), it is envisaged that the imaging collector 110 continuously receives real-time images from the cabin cameras 100a-100n. The images are then fed to a processor (not shown) and the processor may include a first module 120 and a second module 130. The first module 120 is a passenger weight distribution module. The first module 120 determines passenger weight distribution by reviewing the images collected by the imaging collector 110 in order to detect the passengers within the cabin, estimate the passenger positions and to estimate the weight of the passengers. As an example, a first cabin camera may be located to view rows 1-15 on an aircraft, and a second cabin camera may be located to view rows 16-30. As passengers enter the field of view, the image collector 110 collects the images from the first and second cabin cameras. The first module 120 then detects passengers from the images collected from the image collector 110, determines the passenger positions and calculates an estimated weight of the passengers for both sections of the aircraft (e.g. rows 1-15 and rows 16-30). Of course, there may be more than 30 rows of seats and the amount of images collected will depend on the amount of cabin cameras that enable a full view of the passenger cabin.

In the instance where there are overlapping passengers, the system 10 compensates for this by comparing the estimated positions of the passengers in the cabin. When the position of the passengers in the cabin is estimated from the cabin cameras 100a-100n, the same position of the same passengers can be recognised by the system 10 in the cabin, and compensations can be made in order to remove the overlapping image of the passenger. This therefore results in an adjustment to compensate for overlapping passengers within the view of the cabin cameras 100a-100n.

As mentioned, the first module 120 can detect passenger objects in the images collected by the image collector 110. An object detection model, such as MobileNet SSD could be used, as an example. Of course, other detection models could be used. Once the passenger has been detected by the first module 120, the position of the passenger can be estimated. As the position of the cameras, and the layout of the cabin, is known by the processor, the first module 120 can match detected passengers to the position of the cabin (e.g. specific seats). On take-off and landing, the passengers are located in their seats, and, therefore, a static frame image process may be used to determine the position of the passengers at their seats via pixel association. It may be necessary to also know the passenger positions during flight - i.e., to compute the passenger locations all the time. As the position of passengers is to be detected continuously (e.g. during flight), a dynamic algorithm may be used in order to detect the passengers and update as the passengers move around the cabin.

The first module 120 can then estimate the passenger weight. In order to do this, the first module 120 may determine some biometric information from the images collected by the image collector 110. As an example, the first module 120 may be able to determine whether a detected passenger is an adult or a child, and estimate a weight based on the determination. Other additional examples, that may be used in conjunction, could be height estimation via pixel detection, or otherwise; complexion estimation via posture detection; weight estimation based on face landmark extraction; clothing weight estimation based on skin detection, which consists of assessing the amount of skin that is detected for each passenger by the first module 120. Based on one or more of these estimation techniques, the first module 120 can then provide an estimation of the weights of the passengers and their positions.

The second module 130 can detect hand baggage objects in the images collected by the image collector 110. As mentioned above, and as an example, an object detection model, such as MobileNet SSD be used. Of course, other detection models could be used. Once the hand baggage has been detected by the second module 130, the position of the hand baggage can be estimated. As the position of the cameras, and the layout of the cabin, is known by the processor, the second module 130 can match detected hand baggage to the position of the cabin (e.g. the position in the overhead locker, or under the seat in front of their seat). On take-off and landing, the passengers are located in their seats, and, usually, the hand baggage is placed under the seat in front of them or in the overhead locker. Therefore, hand baggage positions may be gathered statically or dynamically. In the static approach, the cabin cameras 100a-100n have the overhead lockers in full view and a static frame image process may be used to determine the position of the hand baggage via pixel association. As the position of hand baggage is to be detected continuously (e.g. during flight), a dynamic algorithm may be used in order to detect the hand baggage and update once the hand baggage has been stored.

The second module 130 can then estimate the hand baggage weight. In order to do this, the second module 130 may determine the size and shape of the hand baggage to determine an estimate of the weight. Further, the second module 130 may be able to use statistical analysis and regulations for baggage allowed in the cabin (e.g. based on the airline) and provide an average weight estimate. A computer vision algorithm could then compute the weight based on the statistical analysis and the hand baggage detected in the images. Based on one or more of these estimation techniques, the second module 130 can then provide an estimation of the weights of the hand baggage and their positions.

The data of the passenger weights and positions from the first module 120, and the data of the hand baggage weights and positions from the second module 130 is then fed to a third module 140. The third module 140 is a cabin weight distribution module. The third module 140 calculates a cabin weight distribution based on the data from the first and second modules 120, 130. The cabin weight distribution can then be used to calculate a centre of gravity for the aircraft. These values are then fed to the Flight Management System such that the centre of gravity of the aircraft may be updated, and the pilot may be informed of a change in the weight distribution. As shown in Figure 1, the processor loops back to the image collector 110 for continuous updating throughout the flight (including on take-off and landing) such that the pilot or the Flight Management System are updated of the weight distribution at all times.

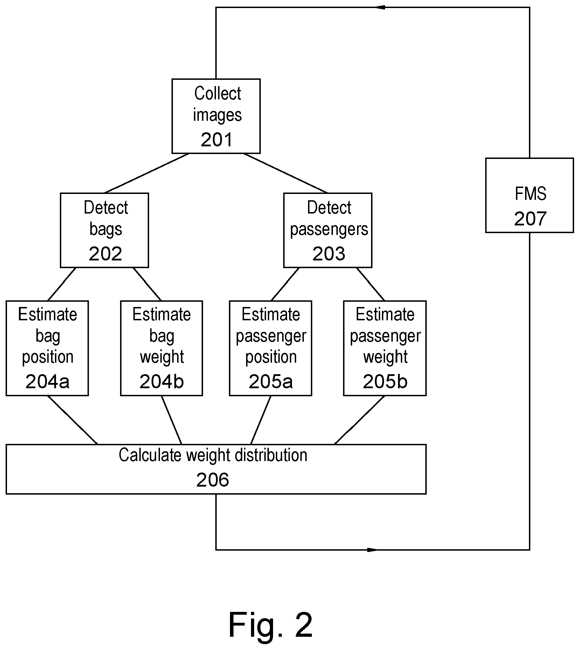

An example of a method of using the system 10 of Figure 1 is shown in Figure 2. As can be seen in Figure 2, the method includes:
- 201:: collecting the images from the cabin cameras 100a-100n;
- 202:: detecting hand baggage from the collection of images;
- 203:: detecting passengers from the collection of images;
- 204a:: estimating hand baggage positions based on the hand baggage detected;
- 204b:: estimating hand baggage weight based on the hand baggage detected;
- 205a:: estimating passenger positions based on the passengers detected;
- 205b:: estimating passenger weights based on the passengers detected;
- 206:: calculating real-time weight distribution based on the estimates in 204a, 204b, 205a and 205b;
- 207:: sending the weight distribution calculation to the Flight Management System.

The steps above are also repeated throughout the entire flight (including take-off and landing) for up-to-date weight distribution calculations.

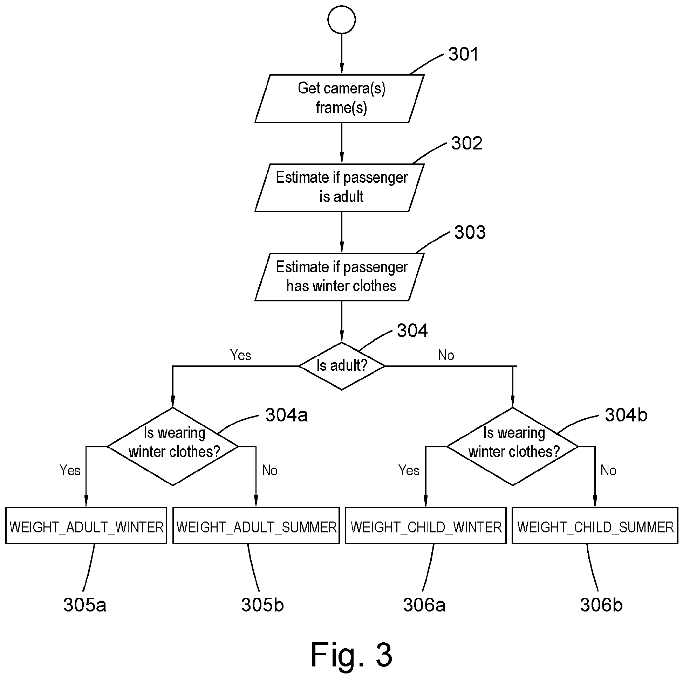

An example of passenger weight estimation is shown in Figure 3. The example shown in this figure could apply to many of the estimations discussed above in relation to Figure 1, but in the particular example shown in Figure 3, identification of summer or winter clothes is made to produce a weight estimate. At step 301, the images are collected from the image collector 110 (shown in Figure 1). The processor then identifies passengers as discussed above. The processor determines if the passenger is an adult at step 302 and then determines if the passenger is wearing winter clothes after analysing the image at step 303. Calculations are used at step 304 to determine if the passenger detected is an adult. If the calculations determine that the detected passenger is not an adult, the processor moves to step 304b and determines if the passenger is wearing winter clothes. If the passenger (i.e., a child passenger) is identified to not be wearing winter clothes, the processor identifies that the passenger is wearing summer clothes at step 306b and calculates a weight estimate accordingly. If the passenger is identified as wearing winter clothes, the processor at step 306a estimates a weight based on the passenger wearing winter clothes. If the calculations determine that the detected passenger is an adult, the processor moves to step 304a and determines if the passenger is wearing winter clothes. If the passenger (i.e., an adult passenger) is identified to not be wearing winter clothes, the processor identifies that the passenger is wearing summer clothes at step 305b and calculates a weight estimate accordingly. If the passenger is identified as wearing winter clothes, the processor at step 305a estimates a weight based on the passenger wearing winter clothes. Therefore, the passengers weight, whether a child or an adult, can be estimated using the steps shown in Figure 3.

Although identifying passengers wearing winter or summer clothes is described and shown in Figure 3, it is envisaged that similar processes may be used to determine the height of the passenger, size and shape of the baggage etc.. The passenger weight estimation is used in conjunction with the determination of the position of the passengers and/or baggage, as discussed above.

The systems and methods described above are therefore used to determine passenger and hand baggage weight distribution to provide an overall weight distribution of the aircraft. The overall weight distribution of the aircraft is determined in real-time before flight, during flight and during landing of the aircraft. The system and method provide an accurate weight distribution to a pilot or Flight Management System during the entire process of boarding, seating, flight, landing and disembarkation of the aircraft.

Although this disclosure has been described in terms of preferred examples, it should be understood that these examples are illustrative only and that the claims are not limited to those examples. Those skilled in the art will be able to make modifications in view of the disclosure which are contemplated as falling within the scope of the appended claims.

## Claims

1. A system (10) for
calculating weight and distribution on an aircraft, the system comprising:
an aircraft;
at least one cabin camera (100a-100n) configured to view the cabin of the aircraft;
an image collector (110) configured to collect images from the at least one cabin camera (100a-100n);
a processor configured to continuously perform the following steps:
a) detecting passengers and/or hand baggage from the images collected from the image collector;
b) estimating positions of the passengers and/or hand baggage from the images collected from the image collector;
c) estimating weight of the passengers and/or hand baggage from the images collected from the image collector;
d) calculating a real-time weight distribution of the aircraft based on the estimates provided in steps a) - c); and
**characterized in that**
the real-time weight distribution of the aircraft is determined pre-flight, during flight and on landing; and **in that**
the real-time weight distribution of the aircraft is continuously updated to a pilot and/or a Flight Management System.

2. The system of claim 1, wherein the system includes:
a first module (120) configured to determine passenger weight distribution based on the images collected from the image collector; and
a second module (130) configured to determine hand baggage weight distribution based on the images collected from the image collector.

3. The system of claim 2, further comprising a third module (140) configured to calculate cabin weight distribution based on the data from the first and second modules (120, 130).

4. The system of claims 2 or 3, wherein the first module is configured to determine biometric information of the detected passengers and wherein the passenger weight distribution is based on the biometric information, and the position, of the passenger.

5. The system of any of claims 3 or 4, wherein the second module is configured to determine the size and shape of detected hand baggage, and wherein the hand baggage weight distribution is based on the size and shape of the detected hand baggage, and the position, of the hand baggage.

6. The system of any preceding claim, wherein the image collector (110) is hardware or software.

7. A method of continuously calculating weight distribution on an aircraft, the method comprising:
collecting images from at least one cabin camera that is configured to view the cabin of the aircraft;
detecting passengers and/or hand baggage from the images collected;
estimating positions of the passengers and/or hand baggage from the collected images;
estimating weight of the passengers and/or hand baggage from the images collected;
calculating a real-time weight distribution of the aircraft based on the estimated weight and estimated positions of the passengers and/or hand baggage;
wherein the real-time weight distribution of the aircraft is determined pre-flight, during flight and/or on landing; and
wherein the real-time weight distribution of the aircraft is continuously updated to a pilot and/or a Flight Management System.

8. The method of claim 7, wherein there is provided a first module for detecting passengers, estimating positions of the passengers and estimating weight of the passengers.

9. The method of claim 8, wherein there is provided a second module for detecting hand baggage, estimating positions of the hand baggage and estimating the weight of the hand baggage.

10. The method of claim 9, wherein there is provided a third module for calculating the weight distribution of the aircraft based on the data from the first and second modules.

11. The method of any of claims 8-10, wherein the first module is configured to determine biometric information of the passengers.

12. The method of any of claims 9-11, wherein the second module is configured to determine the size and shape of detected hand baggage.

## Patentansprüche

1. System (10) zum Berechnen eines Gewichts und einer Verteilung in einem Luftfahrzeug, wobei das System Folgendes umfasst:
ein Luftfahrzeug;
mindestens eine Kabinenkamera (100a-100n), die dazu konfiguriert ist, die Kabine des Luftfahrzeugs zu betrachten;
einen Bildsammler (110), der zum Sammeln von Bildern von der mindestens einen Kabinenkamera (100a-100n) konfiguriert ist; einen Prozessor, der dazu konfiguriert ist, kontinuierlich die folgenden Schritte durchzuführen:
a) Erkennen von Passagieren und/oder Handgepäck aus den von dem Bildsammler gesammelten Bildern;
b) Schätzen von Positionen der Passagiere und/oder des Handgepäcks aus den von dem Bildsammler gesammelten Bildern;
c) Schätzen eines Gewichts der Passagiere und/oder des Handgepäcks aus den von dem Bildsammler gesammelten Bildern;
d) Berechnen einer Echtzeit-Gewichtsverteilung des Luftfahrzeugs basierend auf den in den Schritten a) - c) bereitgestellten Schätzungen; und
**dadurch gekennzeichnet, dass**
die Echtzeit-Gewichtsverteilung des Luftfahrzeugs vor dem Flug, während des Fluges und bei der Landung bestimmt wird; und dadurch, dass die Echtzeit-Gewichtsverteilung des Luftfahrzeugs kontinuierlich für einen Piloten und/oder ein Flugmanagementsystem aktualisiert wird.

2. System nach Anspruch 1, wobei das System Folgendes beinhaltet:
ein erstes Modul (120), das dazu konfiguriert ist, eine Gewichtsverteilung der Passagiere basierend auf den von dem Bildsammler gesammelten Bildern zu bestimmen; und
ein zweites Modul (130), das dazu konfiguriert ist, eine Gewichtsverteilung des Handgepäcks basierend auf den von dem Bildsammler gesammelten Bildern zu bestimmen.

3. System nach Anspruch 2, ferner ein drittes Modul (140) umfassend, das dazu konfiguriert ist, eine Kabinengewichtsverteilung basierend auf den Daten von dem ersten und dem zweiten Modul (120, 130) zu berechnen.

4. System nach Anspruch 2 oder 3, wobei das erste Modul dazu konfiguriert ist, biometrische Informationen der erkannten Passagiere zu bestimmen, und wobei die Gewichtsverteilung der Passagiere auf den biometrischen Informationen und der Position des Passagiers basiert.

5. System nach einem der Ansprüche 3 oder 4, wobei das zweite Modul dazu konfiguriert ist, die Größe und Form des erkannten Handgepäcks zu bestimmen, und wobei die Gewichtsverteilung des Handgepäcks auf der Größe und Form des erkannten Handgepäcks und der Position des Handgepäcks basiert.

6. System nach einem der vorhergehenden Ansprüche, wobei der Bildsammler (110) Hardware oder Software ist.

7. Verfahren zum kontinuierlichen Berechnen einer Gewichtsverteilung in einem Luftfahrzeug, wobei das Verfahren Folgendes umfasst:
Sammeln von Bildern von mindestens einer Kabinenkamera, die dazu konfiguriert ist, die Kabine des Luftfahrzeugs zu betrachten; Erkennen von Passagieren und/oder Handgepäck aus den gesammelten Bildern;
Schätzen von Positionen der Passagiere und/oder des Handgepäcks aus den gesammelten Bildern;
Schätzen eines Gewichts der Passagiere und/oder des Handgepäcks aus den gesammelten Bildern;
Berechnen einer Echtzeit-Gewichtsverteilung des Luftfahrzeugs basierend auf dem geschätzten Gewicht und den geschätzten Positionen der Passagiere und/oder des Handgepäcks;
wobei die Echtzeit-Gewichtsverteilung des Luftfahrzeugs vor dem Flug, während des Flugs und/oder bei der Landung bestimmt wird; und
wobei die Echtzeit-Gewichtsverteilung des Luftfahrzeugs kontinuierlich für einen Piloten und/oder ein Flugmanagementsystem aktualisiert wird.

8. Verfahren nach Anspruch 7, wobei ein erstes Modul zum Erkennen von Passagieren, zum Schätzen von Positionen der Passagiere und zum Schätzen eines Gewichts der Passagiere bereitgestellt ist.

9. Verfahren nach Anspruch 8, wobei ein zweites Modul zum Erkennen von Handgepäck, zum Schätzen von Positionen des Handgepäcks und zum Schätzen des Gewichts des Handgepäcks bereitgestellt ist.

10. Verfahren nach Anspruch 9, wobei ein drittes Modul zum Berechnen der Gewichtsverteilung des Luftfahrzeugs basierend auf den Daten des ersten und des zweiten Moduls bereitgestellt ist.

11. Verfahren nach einem der Ansprüche 8-10, wobei das erste Modul dazu konfiguriert ist, biometrische Informationen der Passagiere zu bestimmen.

12. Verfahren nach einem der Ansprüche 9-11, wobei das zweite Modul dazu konfiguriert ist, die Größe und Form des erkannten Handgepäcks zu bestimmen.

## Revendications

1. Système (10) de calcul de répartition de poids sur un aéronef, le système comprenant :
un aéronef ;
au moins une caméra de cabine (100a-100n) configurée pour visualiser la cabine de l'aéronef ;
un collecteur d'images (110) configuré pour collecter des images provenant de l'au moins une caméra de cabine (100a-100n) ;
un processeur configuré pour effectuer en continu les étapes suivantes de :
a) détection de passagers et/ou de bagages à main à partir des images collectées par le collecteur d'images ;
b) estimation de positions des passagers et/ou des bagages à main à partir des images collectées par le collecteur d'images ;
c) estimation de poids des passagers et/ou des bagages à main à partir des images collectées par le collecteur d'images ;
d) calcul d'une répartition de poids en temps réel de l'aéronef sur la base des estimations prévues aux étapes a) à c) ; et **caractérisé en ce que**
la répartition de poids en temps réel de l'aéronef est déterminée avant le vol, pendant le vol et à l'atterrissage ; et **en ce que** la répartition de poids en temps réel de l'aéronef est continuellement mise à jour pour un pilote et/ou un système de gestion de vol.

2. Système selon la revendication 1, dans lequel le système comporte :
un premier module (120) configuré pour déterminer une répartition de poids de passagers sur la base des images collectées par le collecteur d'images ; et
un deuxième module (130) configuré pour déterminer une répartition de poids de bagages à main sur la base des images collectées par le collecteur d'images.

3. Système selon la revendication 2, comprenant également un troisième module (140) configuré pour calculer une répartition de poids de cabine sur la base des données provenant des premier et deuxième modules (120, 130).

4. Système selon les revendications 2 ou 3, dans lequel le premier module est configuré pour déterminer des informations biométriques des passagers détectés et dans lequel la répartition de poids de passagers est basée sur les informations biométriques, et la position, des passagers.

5. Système selon l'une quelconque des revendications 3 ou 4, dans lequel le deuxième module est configuré pour déterminer la taille et la forme de bagages à main détectés, et dans lequel la répartition de poids de bagages à main est basée sur la taille et la forme des bagages à main détectés, et la position, des bagages à main.

6. Système selon une quelconque revendication précédente, dans lequel le collecteur d'images (110) est un matériel ou un logiciel.

7. Procédé de calcul en continu de répartition de poids sur un aéronef, le procédé comprenant :
la collecte d'images provenant d'au moins une caméra de cabine qui est configurée pour visualiser la cabine de l'aéronef ;
la détection de passagers et/ou de bagages à main à partir des images collectées ;
l'estimation de positions des passagers et/ou des bagages à main à partir des images collectées ;
l'estimation de poids des passagers et/ou des bagages à main à partir des images collectées ;
le calcul d'une répartition de poids en temps réel de l'aéronef sur la base du poids estimé et des positions estimées des passagers et/ou des bagages à main ;
dans lequel la répartition de poids en temps réel de l'aéronef est déterminée avant le vol, pendant le vol et/ou à l'atterrissage ; et
dans lequel la répartition de poids en temps réel de l'aéronef est continuellement mise à jour pour un pilote et/ou un système de gestion de vol.

8. Procédé selon la revendication 7, dans lequel un premier module est prévu pour la détection de passagers, l'estimation de positions des passagers et l'estimation de poids des passagers.

9. Procédé selon la revendication 8, dans lequel un deuxième module est prévu pour la détection de bagages à main, l'estimation de positions des bagages à main et l'estimation du poids des bagages à main.

10. Procédé selon la revendication 9, dans lequel un troisième module est prévu pour calculer la répartition de poids de l'aéronef sur la base des données provenant des premier et deuxième modules.

11. Procédé selon l'une quelconque des revendications 8 à 10, dans lequel le premier module est configuré pour déterminer des informations biométriques des passagers.

12. Procédé selon l'une quelconque des revendications 9 à 11, dans lequel le deuxième module est configuré pour déterminer la taille et la forme des bagages à main détectés.
